# EUROPÄISCHE PATENTANMELDUNG

(11) **EP 2 418 005 A1**
(43) Veröffentlichungstag der Anmeldung: **15.02.2012**
(21) Anmeldenummer: 10172701.4
(22) Anmeldetag: 12.08.2010
(51) Int. Cl.: A62C 35/02, C01B 23/00, C06D 5/02, B60R 21/268, A62C 99/00

(54) **Inertgasgemisch und Verwendungen hierfür**

(71) Anmelder: Knura, Rüdiger, 78199 Döggingen (DE); Upazzoli, Roberto, 6963 Pregassona (CH)
(72) Erfinder: Knura, Rüdiger, 78199 Döggingen (DE); Upazzoli, Roberto, 6963 Pregassona (CH)
(74) Vertreter: Fleuchaus, Michael A.

(57) **Zusammenfassung**

Die Erfindung betrifft ein hochkompressibles und -fluides Inertgasgemisch enthaltend 70 bis 95 Vol.% Argon und Rest Helium als Hauptkomponenten sowie die Verwendung des Inertgasgemischs als Löschgas und als Treibgas. Das erfindungsgemäße Inertgasgemisch ist bis zu einem Druck von 5000 bar ohne Phasenübergang komprimierbar und weist bei 273 K eine Viskosität von weniger als 21 µPa*s auf.

## Beschreibung

Die Erfindung betrifft ein Gasgemisch sowie dessen Verwendungen. Insbesondere betrifft die Erfindung ein Inertgasgemisch enthaltend die Edelgase Argon und Helium.

Edelgase sind farb- und geruchlose, nicht brennbare und kaum wasserlösliche Gase. Sie kommen nur atomar vor, d. h. nicht molekular, da sie unter normalen Bedingungen in Bezug auf Temperatur und Druck chemisch nahezu keine Verbindungen eingehen können. Der Grund hierfür liegt darin, dass die Elektronenschalen des Atoms abgeschlossen, d. h. vollständig mit Elektronen besetzt sind.

Das Bestreben, einen energetisch günstigeren Zustand anzustreben, kann als wesentliche Ursache für chemische Reaktionen angesehen werden. Hierbei entstehen dann durch Verbindung mit anderen Atomen Moleküle oder, durch Aufnahme oder Abgabe von Elektronen, Ionen. Vereinfacht gesagt, streben Atome häufig (aber nicht immer) eine Edelgaskonfiguration ihrer Elektronenschalen an, d. h. die Elektronenschalen sollen vollständig besetzt sein. Diese so genannte Edelgaskonfiguration ist energetisch betrachtet in vielen Fällen als energetischer Idealzustand eines Atoms anzusehen.

Im Unterschied zu allen anderen gasförmigen Elementen bzw. sämtlichen Nichtmetallen, liegt bei Edelgasen im ungebundenen Grundzustand eine Edelgaskonfiguration ihrer Elektronenschalen vor, weshalb Edelgase in der Natur nicht molekular, sondern nur atomar, d. h. einatomig.

Daher werden Edelgase auch als chemisch inerte Gase oder eben Inertgase bezeichnet. Chemisch inerte Substanzen sind dabei solche, die sich nur an wenigen chemischen Reaktionen beteiligen; entsprechend sind Inertgase sehr reaktionsträge Gase.

Ob ein bestimmtes Gas in einer bestimmten Anwendung chemisch inert ist, hängt vom konkreten Fall, also zum Beispiel den physikalischen Rahmenbedingungen wie Temperatur und Druck, und auch vom Vorhandensein etwaiger Reaktionspartner ab. Generell werden jedoch die Elemente der 8. Hauptgruppe des Periodensystems der Elemente, die sogenannten Edelgase, als Inertgase bezeichnet.

Wie bereits ausgeführt, handelt es sich bei der Bezeichnung "Inertgas" um einen relativ abstrakt beschreibenden und nicht um einen wirklich klassifizierenden Begriff. Die Gemeinsamkeit verschiedener Inertgase reduziert sich auf ihre Reaktivität, also ein - unter bestimmten Bedingungen - reaktionsträges Verhalten. Alle anderen Eigenschaften dieser Gase, insbesondere die physikalischen Eigenschaften wie Dichte, Viskosität, Löslichkeit etc., sind von dieser Begrifflichkeit nicht erfasst, können also frei variieren, ohne die Zugehörigkeit des jeweiligen Gases zu den Inertgasen zu stören.

Entsprechend lassen sich auch erheblich voneinander verschiedene physikalische Eigenschaften bei den Edelgasen feststellen. So ergibt sich zwar das reaktionsträge Verhalten aus dem abgeschlossenen Energieniveau, wohingegen z. B. Dichte, Viskosität und Löslichkeit unter anderem von der Atommasse abhängen, und so mit steigender Kernladungszahl verschiedene Größen annehmen.

Inertgase finden auf Grund ihrer Reaktionsträgheit Anwendung in verschiedenen technischen Bereichen, wie zum Beispiel als Schutzgase in Lager - und Treibstofftanks, beim Schweißen, in der Brandbekämpfung oder auch in der Verpackungstechnik, zum Beispiel bei der Verpackung von Lebensmitteln. So dient zum Beispiel Argon als Schutzgas bei bestimmten Schweißvorgängen. Immer wenn luftempfindliche, also oxidierbare Metalle geschmolzen oder verschweißt werden (z. B. Aluminium, Magnesium, Titan, Molybdän), verhindert Argon den Luftzutritt, welche Oxid- und Nitridbildung oder gar Selbstentzündung von Leichtmetallen zur Folge haben kann. Das Lichtbogenschweißen unter Edelgasatmosphäre erspart zudem den Einsatz von Flussmittel.

Bei diesen Anwendungen finden Inertgase Verwendung, um andere Gase, wie zum Beispiel Luft von bestimmten chemischen Reaktionen fernzuhalten.

Bei der Brandbekämpfung eigenen sich die vollkommen rückstandsfrei löschenden Inertgas-Löschanlagen besonders zur Anwendung in Bereichen in denen Wasser, Schaum oder Pulver als Löschmittel aufgrund zu erwartender Löschfolgeschäden nicht eingesetzt werden können

(Schalt- und Steueranlagen, EDV- und Telekommunikationsanlagen und -Einrichtungen und andere hochwertige Technik, unwiederbringliche Kulturgüter, uvm.). Die Inertgase bewirken, dass der Sauerstoffanteil reduziert wird und sich eine Verbrennung so nicht weiter fortpflanzen kann bzw. erstickt wird.

Bei der Verwendung von Inertgasen treten natürlich neben dem jeweils gewünschten Effekt der Inertisierung auch solche Nebeneffekte auf, die durch die besonderen Eigenschaften, insbesondere die physikalischen Eigenschaften des verwendeten Inertgases bedingt sind.

Besonders deutlich wird dies bei Anwendungen, wie zum Beispiel der Verwendung von Inertgasen als Löschgas, bei der verschiedene Nebeneffekte basierend auf besonderen Eigenschaften der Gase, die über ihr reaktionsträges Verhalten hinaus gehen, zum Tragen kommen woraus sich verschiedene Probleme ergeben. So werden die Gase in der Regel komprimiert gelagert und auch in dieser Form an den Wirkort gebracht. Aus Platzgründen, aber auch im Sinne einer Transportrate ist eine möglichst hohe Kompression des Gases erstrebenswert.

Die Kompression der Gase führt je nach angewendetem Druck zur Kondensation der Gase, und damit zu einem Phasenübergang zum flüssigen Aggregatszustand des Gases. Dieser Phasenübergang kehrt sich bei der Verwendung des Gases um, das Gas geht also von seinem flüssigen in den gasförmigen Aggregatszustand über. Hierfür muss die nötige Energie, die sogenannte Verdampfungsenthalpie aufgebracht werden, wodurch das System der Umgebung Wärme entzieht, was zu einer sehr starken Abkühlung der Umgebung führt.

Dies ist zwar bei bestimmten Anwendungen, wie zum Beispiel bei Kompressorkühlschränken ein durchaus erwünschter Effekt, dies ist jedoch nicht immer der Fall. Insbesondere beim großflächigen Einsatz von Gasen, wie zum Beispiel die Verwendung von bis zur Verflüssigung komprimierten Löschgasen bei der Brandbekämpfung führt mitunter zu einer vehementen Temperaturabsenkung in dem zu löschenden Raum, was von einer zusätzlichen psychischen Belastung und daraus resultierendem panischen Verhalten bis hin zu Erfrierungen bei anwesenden Personen führen kann. Aber auch bei punktuellen Anwendungen, wie zum Beispiel beim Schutzgasschweißen, kann eine extreme Abkühlung zum Beispiel eines Werkstücks unerwünscht sein, da hierdurch die sowohl das Material als auch die Schweißstelle beeinträchtigt werden können. Darüber hinaus ergeben sich aus den Eigenschaften verschiedener Gase oder Gasgemische zum Teil Probleme die zu Einschränkungen bei deren Anwendung oder Anwendungsmöglichkeiten führen. So muss zum Beispiel bei der Brandbekämpfung der Raum mit dem verwendeten Löschgas geflutet werden, um den vorhandenen Sauerstoff vom Brandherd zu verdrängen und so Oxidationsprozesse zu unterbinden und damit das Feuer zu ersticken.

Hierbei sammeln sich Gase mit hoher Dichte, die demnach also schwerer sind als Luft, am Boden, solche mit geringer Dichte, die also leichter sind als Luft, unter der Decke. Dies kann den gewünschten Effekt negativ beeinflussen und einen deutlich erhöhten Gasbedarf erforderlich machen, um durch einen Überdruck eine wirksame Inertgaskonzentration im gesamten Raum zu bewirken.

Ein weiterer dieser Nebeneffekte ist die Beeinflussung der Schallgeschwindigkeit in Abhängigkeit der Dichte des Mediums, bei der Flutung eines Raumes mit Inertgas zum Beispiel zum Zwecke der Brandlöschung, also der Dichte des dabei resultierenden Raumgasgemischs. So bewirkt beispielsweise Helium eine Erhöhung der Schallgeschwindigkeit im Vergleich zur Luft wodurch die menschliche Stimme deutlich höher erscheint. Ein gegenteiliger Effekt kann durch schwerere Gase wie Argon oder Xenon erreicht werden. Dieser Effekt, der unter normalen Bedingungen zur allgemeinen Erheiterung betragen kann, kann jedoch unter extremer Stresssituation wie bei einem Brand zu Panik und Verängstigung führen.

Doch auch andere Eigenschaften von Inertgasen können Einschränkungen ihrer Nutzbarkeit zur Folge haben. Im Kontext der schnellen Inertisierung größerer Räume, wie eben bei der Brandbekämpfung erforderlich, spielt auch die Viskosität respektive Fluidität der Gase eine große Rolle, da hierdurch die Ausbreitungsgeschwindigkeit des Gase beeinflusst wird. So hat zum Beispiel Argon eine relativ hohe Viskosität und damit eine niedrige Fließgeschwindigkeit, was sich nachteilig in bezug auf eine schnelle Flutung größerer Räume auswirkt. Dennoch wird bei Löschgasen bevorzugt Argon verwendet. Dem liegen in erster Linie finanzielle Aspekte zugrunde.

Argon ist mit 0,933 Volumenprozent das am häufigsten in der Atmosphäre vorkommende Edelgas und kann mit verhältnismäßig geringem Aufwand mittels fraktionierter Destillation flüssiger Luft (Luftverflüssigung) gewonnen werden und ist damit das kostengünstigste Edelgas.

Ein weiterer Aspekt der Erfindung ergibt sich aus dem Bereich der Verwendung von Gasen als Druck- beziehungsweise Treibgase, unabhängig davon, ob hierbei Expansionsenergie mechanisch genutzt wird, oder ob es sich um eine Steigerung der Lagerungsdichte des Gases handelt.

Der entscheidende Parameter hierbei ist die sogenannte Kompressibilität. Die Kompressibilität ist ein Maß dafür, wie leicht bzw. wie stark sich ein Stoff komprimieren lässt, vorzugsweise ohne dabei einen Phasenübergang in die flüssige Phase zu durchlaufen. Eine große Kompressibilität bedeutet eine große Verminderung des Volumens bei Druckerhöhung. Häufig wird statt der Kompressibilität auch deren Kehrwert, das Kompressionsmodul, verwendet.

Die Kompression ist ein allseitiges Zusammendrücken eines Körpers, welches dessen Volumen verringert und seine Dichte (Massendichte) erhöht. Körper werden nur als kompressibel betrachtet, wenn die auftretenden Druckveränderungen ausreichen, um merkliche Dichteänderungen zu verursachen. Dies ist meist nur bei Gasen der Fall, beziehungsweise wird zur Kompression von Festkörpern und Flüssigkeiten ein solch hoher Druck benötigt, dass dies in der Regel vernachlässigt werden kann und somit im Allgemeinen von einer Inkompressibilität von Flüssigkeiten und Festkörpern gesprochen wird.

Nach dem Vorgang ist der Körper bzw. das Gas verdichtet (komprimiert). In der Regel erfolgt nur eine elastische Verformung und die Verdichtung kehrt sich beim Nachlassen des Drucks wieder um, der Körper dehnt sich wieder aus (Expansion). Hierbei wird die Energie, die vorher zur Kompression verwendet wurde wieder frei und kann, wie zum Beispiel bei Treibgasen entsprechend genutzt werden. Entscheidend für die Menge an Energie, die auf diese Weise "gespeichert" werden kann ist entsprechend auch die Kompressibilität des Stoffes und bis zu welchem Druck der entsprechende Stoff komprimiert werden kann, ohne dass der Körper einen Phasenübergang vollzieht, also beispielsweise von der Gasphase in die flüssige Phase übergeht.

Entsprechend der Gesetze der Thermodynamik erfahren allerdings alle Gase bei einem bestimmten, stoffspezifischen Druck (in Abhängigkeit von der Temperatur) eine Phasenübergang, das bedeutet, dass das Gas ab diesem Druck flüssig wird.

Da, wie bereits dargelegt, Flüssigkeiten fast nicht komprimiert werden können, bedeutet dies, dass der Druck, bei dem der Phasenübergang erfolgt, das Ende der Kompressionsfähigkeit des Stoffes und damit auch das Ende einer möglichen Verdichtung und Aufnahme mechanischer Energie dieses Stoffes bedeutet. Entsprechend wird die Verwendung eines Gases als Treibgas, aber auch seine mögliche Verdichtung für eine effektive Lagerung, durch eben diesen Parameter bestimmt und limitiert. Aufgabe der vorliegenden Erfindung ist die Bereitstellung eines Inertgasgemischs, welche die im Stand der Technik bekannten Nachteile und daraus resultierende Limitationen bezüglich der Anwendung von Inertgasen wenigsten teilweise überwindet.

Die vorstehende Aufgabe wird durch ein erfindungsgemäßes Inertgasgemisch gemäß Anspruch 1 gelöst. Bevorzugte Ausführungsformen des Inertgasgemischs sind Gegenstand der jeweiligen Unteransprüche.

Ansprüche 5 bis 10 betreffen Verwendungen des erfindungsgemäßen Inertgasgemischs und deren bevorzugte Ausführungsformen.

Demnach besteht das erfindungsgemäße Gasgemisch aus den Edelgasen Argon und Helium als dessen Hauptkomponenten, wobei wenigstens 70 Vol.% Argon enthalten sind, und wobei das Gasgemisch ohne Phasenübergang bis zu 5000 bar kompressibel ist und die Viskosität des Gasgemischs bei 273 K kleiner als 21 µPa*s ist.

In einer weiteren bevorzugten Ausführungsform des erfindungsgemäßen Gasgemischs liegt der Argongehalt zwischen 75 und 95 Vol.%, vorzugsweise zwischen 80 und 90 Vol.%, vorzugsweise bei 88 ± 1 Vol.%. Ein erfindungsgemäßes Gasgemisch, welche diese Zusammensetzung aufweist erfüllt die Anforderungen an Kompressibilität, Fließgeschwindigkeit und weitere physikalische Parameter in besonders geeigneter Weise.

In einer weiteren Ausführungsform kann das erfindungsgemäße Inertgasgemisch als eine Nebenkomponente bis zu 0,1 Vol.%, bevorzugt 0,05 Vol.% eines Odoriermittels enthalten. Als Odoriermittel im Sinne der vorliegenden Erfindung werden Geruchsstoffe verstanden, die als Sicherheitsmaßnahme sonst geruchlosen Gasen beigemengt werden, um so den Gasen einen - zum Beispiel für eine Gefährdung typischen - Geruch zu verleihen.

Verunreinigungen des Gasgemischs mit anderen Gasen, welche durch die Herstellung oder die Lagerung des erfindungsgemäßen Gasgemischs hervorgerufen werden, stellen ebenfalls Nebenkomponenten des Gasgemischs dar. Insbesondere kommen auch weitere Bestandteile als Nebenkomponenten des Gasgemischs in Frage, sofern diese die physikalischen Eigenschaften des Gasgemischs nicht oder nicht wesentlich beeinflussen.

Die Erfindung umfasst ferner auch die Verwendung des erfindungsgemäßen Gasgemischs als Löschgas und /oder als Treibgas. Hierbei wird das erfindungsgemäße Gasgemisch wenigstens zum Zwecke der Lagerung zeitweise komprimiert beziehungsweise wird in komprimierter Form vorgehalten, also als Druckgas verwendet. Das Inertgasgemisch unterliegt hierbei einem Kompressionsdruck von 100 bis 5000 bar, vorzugsweise 1000 bar, bevorzugt 300 bar.

Unter der Verwendung als Druckgas im Sinne der vorliegenden Erfindung werden all solche Anwendungen verstanden, bei denen das erfindungsgemäße Inertgas komprimiert wird bzw. wurde und unter Umständen die bei der Kompression aufgewendete Arbeit beim Entspannen des Gases genutzt werden kann.

Insbesondere umfasst die Erfindung auch die Verwendung der erfindungsgemäßen Inertgasgemischs als Löschgas oder als Treibgas, aber auch die Lagerung des Gasgemischs in komprimierter Form zum Einsatz für derartige Anwendungen.

Unter Löschgas im Sinne der vorliegenden Erfindung wird ein erstickendes, vorzugsweise inertes Gas oder Gasgemisch verstanden, das den Luftsauerstoff vom Brand oder Brandherd verdrängt und somit den exothermen Oxidationsprozess unterbindet.

Unter Treibgas im Sinne der vorliegenden Erfindung wird verdichtetes Gas verstanden, dessen Verwendung sich über die gerichtete Expansion des komprimierten Gases definiert und dadurch zur Beschleunigung eines festen oder flüssigen Gegenstandes führt.

Das nachfolgende Ausführungsbeispiel beschreibt die Verwendung eines erfindungsgemäßen Inertgasgemischs als Druckgas. Das Inertgasgemisch setzt sich in diesem Fall zusammen aus 88,8 Volumenprozent Argon, 11,15 Volumenprozent Helium und 0,05 Volumenprozent eines Odoriermittels und wird bei 300 bar oder mehr, wie z. B. 500 bar, 700 bar, 1000 bar, 1500 bar oder 2000 bar gelagert. Sämtliche zwischen diesen Werten liegende Drücke zur Lagerung des Erfindungsgemäßen Gasgemischs sind dabei gleichermaßen möglich, bis hin zu 5000 bar. Aufgrund des spezifischen Mischungsverhältnisses der beiden Edelgase bleibt das Gasgemisch trotz des hohen Kompressionsdrucks gasförmig, das heißt es erfolgt keine Phasenübergang bei der Expansion.

Dadurch wird ein Absenken der Temperatur aufgrund der Expansionskälte, wie es bei der Verwendung von unter Druck verflüssigten Gasen vorkommt, wirkungsvoll unterbunden.

Darüber hinaus wird bei der erfindungsgemäßen Inertgasmischung die Fluidität gegenüber reinem Argon deutlich erhöht und somit die Ausgasung und ggf. Verteilung deutlich beschleunigt.

Die hohe Fluidität des erfindungsgemäßen Gasgemisches bewirkt zum einen, dass das Gas sehr schnell aus seinem Druckbehältnis entweichen, demnach auch entsprechend schnell expandieren und sich darüber hinaus auch sehr schnell ausbreiten kann. Dies ist zum einen bei der Verwendung als Lösch- oder Schutzgas von großer Bedeutung, da schnell eine wirksame Gaskonzentration in einem Raum erzeugt werden kann. Zum anderen ist dies aber auch bei anderen Anwendungen, wie zum Beispiel bei der Verwendung als Treibgas von Vorteil, da dass Gas schnell aus dem jeweiligen Vorratsbehälter oder Leitungssystem ausströmen kann, und sehr schnell expandiert, also entsprechend die "gespeicherte" mechanische Energie sehr schnell freigibt und sich darüber hinaus aber auch schnell wieder verflüchtig, also kaum Bereiche erhöhter Gaskonzentrationen nach der Verwendung zurückbleiben.

In einem weiteren Ausführungsbeispiel wird das erfindungsgemäße Inertgasgemisch als Löschgas verwendet. Das Inertgasgemisch setzt sich beispielsweise zusammen aus 88,8 Volumenprozent Argon, 11,15 Volumenprozent Helium und 0,05 Volumenprozent eines Odoriermittels und wird wiederum bei 300 bar oder mehr, wie z. B. 500 bar, 700 bar, 1000 bar, 1500 bar oder 2000 bar gelagert. Sämtliche zwischen diesen Werten liegende Drücke zur Lagerung des Erfindungsgemäßen Gasgemischs sind dabei gleichermaßen möglich. Das erfindungsgemäße Inertgasgemisch kann aufgrund der erfindungsgemäßen Kombination der beiden Edelgaskomponenten auch deutlich stärker komprimiert (bis 5000 bar) gelagert werden. Für die Verwendung als Löschgas sind in diesem Fall entsprechende Löschanlagen mit entsprechenden Schnellschaltventilen erforderlich.

Die im Rahmen des vorangegangenen Ausführungsbeispiels beschriebenen Eigenschaften kommen auch bei der Verwendung als Löschgas zum Tragen. Da es, wie bereits erwähnt, nicht zum Absinken der Temperatur aufgrund der Expansionskälte kommt, wird bei der großflächigen Verwendung als Löschgas eine Verunsicherung von sich im Flutungsbereich befindlicher Personen verhindert. Durch die hohe Fließgeschwindigkeit des erfindungsgemäßen Inertgasgemischs (die Viskosität des Gasgemischs bei 273 K ist kleiner als 21 µPa*s) verteilt sich das Gas sehr schnell in seinem Einsatzbereich.

Im Sinne einer effektiven Brandbekämpfung kommt eine weitere Eigenschaft des erfindungsgemäßen Gasgemischs zum Tragen: Im Gegensatz zur Verwendung von Argon als Löschgas, das sich aufgrund seiner Dichte am Boden sammelt, verteilt sich das erfindungsgemäße Gasgemisch in Bezug auf die Raumhöhe in allen Schichten. Diese Schichtung der verschiedenen Gase bewirkt gleichzeitig einen bessern Abschluss gegen andere vorhandene Gase, da sich in Abhängigkeit der Dichte eine mehrschichtige Löschgasverteilung ausbildet. So bildet sich eine gewisse Zeit nach der Einleitung des Gases in den Brandbereich zum Beispiel am Boden ein Bereich mit einer höheren relativen Argonkonzentration, auf welchem Schichten verschiedener Argon/Helium Mischungen und schließlich eine Schicht einer höheren relativen Heliumkonzentration liegt. Dies führt zur einer im Vergleich zum Beispiel zu reinem Argon, wesentlich besseren Verdrängungen von Sauerstoff aus einem größeren Raum und damit zu einer effizienteren Brandbekämpfung.

Im weiteren Verlauf der Brandbekämpfung führt die fortlaufende Entmischung der beiden Gase darüber hinaus zu einer vollständigeren Erfassung vorhandener Brandherde. Während sich das schwerere Argon am Boden sammelt und so auch in etwaige Vertiefungen oder nach unten gerichtete Öffnungen, bodennahe Hinterlüftungen und dergleichen fließt, sammelt sich das Helium im Deckenbereich und diffundiert insbesondere auch in die Decke oder tritt durch Öffnungen im Deckenbereich zum Beispiel hinter Abhängungen der Decke ein. Insbesondere in diesen Bereichen ist ein nachhaltiger Löscheffekt erwünscht, da sich in diesen Bereichen häufig brandverursachende Kabelstränge, Leitungen und dergleichen befinden, die überdies im Brandfall schlecht zugänglich sind.

Die Dichte des Gasgemischs hat gleichzeitig einen weiteren positiven Effekt bei der Verwendung des erfindungsgemäßen Gasgemischs als Löschgas. So wird durch die entsprechende Mischung eine Beeinflussung der Schallgeschwindigkeit nahezu vollständig verhindert, zumindest solange keine Entmischung des Gasgemischs erfolgt ist. Während zum Beispiel durch Helium die Schallgeschwindigkeit deutlich erhöht wird, die menschliche Stimme wird dadurch merkbar erhöht, wird durch Argon die Schallgeschwindigkeit reduziert, wodurch die menschliche Stimme wesentlich tiefer wirkt. Diese Veränderungen der Stimme können in Stresssituation wie eben bei Bränden, zu Irritationen bis hin zu Panik bei anwesenden Personen führen. Eine solche Beeinflussung tritt bei der Verwendung des erfindungsgemäßen Inertgasgemischs nicht auf; die Auswirkung auf die Schallgeschwindigkeit ist nur marginal, insbesondere im Anfangszeitpunkt des Löschvorgangs, in dem die anwesenden Personen den Gaseintritt unter Anderem durch die durch das Odoriermittel vermittelte Geruchswahrnehmung wahrnehmen und eine Evakuierung schnell erfolgen sollte.

Der Effekt der gegenüber Luft im wesentlichen gleichbleibenden Schallgeschwindigkeit verliert sich in Folge der Entmischung des Gasgemischs. Dies stellt jedoch keinen Nachteil der Erfindung dar. Zum einen führt die Entmischung der beiden Gase dazu, dass sich das schwerere Argon am Boden sammelt, wohingegen das leichtere Helium aufsteigt und hierdurch die vorstehend diskutierten vorteilhaften Effekte auftreten. Die Entmischung führt insbesondere dazu, dass nach einer gewissen Latenzzeit in Kopfhöhe keine die Schallgeschwindigkeit wesentlich beeinflussenden Gaskonzentration mehr anzutreffen ist. Dies ist vorteilhaft, da Personen (und Tiere), auch wenn sie sich wider erwarten zu diesem Zeitpunkt noch im Brandbereich befinden sollten, nicht durch eine etwaige Beeinflussung der Schallgeschwindigkeit irritiert werden.

Zudem liegt ein weiterer, wesentlicher Vorteil darin, dass die Komponenten des Gasgemischs nicht direkt mit dem Atmungssystem des Körpers interagieren und zum Beispiel nicht von Hämoglobin gebunden werden. Erstickungserscheinungen und insbesondere Bewusstlosigkeit treten daher nicht, wie im Falle einer Flutung mit CO²-Gas, was im Stand der Technik ebenfalls häufig als Löschgas Verwendung findet, gleichermaßen schnell auf, sondern es verbleibt mehr Zeit für eine geordnete Evakuierung der Brandstelle. Eine Anreicherung der Atemluft durch den gerichteten Einsatz des erfindungsgemäßen Gasgemischs hat somit keine unmittelbar negativen Auswirkungen auf eventuell anwesende Personen.

Vorzugsweise wird der Einsatz des erfindungsgemäßen Gasgemischs durch die Bemischung eines Odoriermittels, wie zum Beispiel "Zitrus", "Gasgeruch" oder "faule Eier", deutlich gekennzeichnet, so dass im Brandbereich befindliche Personen das Vorhandensein des sonst geruchlosen Gasgemisches wahrnehmen können und entsprechend reagieren können, wenn nicht ein Odoriermittel, wie z. B. "Gasgeruch" oder "faule Eier" Verwendung findet, welches ohnehin eine Art "langsame Evakuierung" der anwesenden Personen durch ein Meidungs- bzw. Ausweichverhalten hervorruft.

Bei der Verwendung als Löschgas kann das erfindungsgemäße Inertgasgemisch auch in hochkomprimierter Form in gezielt und kontrolliert sich öffnenden Druckbehältern, also einer Art Löschgranate, an den Brandherd effektiv herangebracht werden. Durch die hohe Kompressionsmöglichkeit des Gasgemischs kann in relativen kleinen Druckbehältern bereits eine wirksame Menge Gas an den jeweiligen Einsatzort gebracht werden. In diesem Zusammenhang wäre auch eine Brandlöschung in der Art einer Sprengung denkbar, bei welcher ein Brand, z. B. einer Ölquelle, durch eine Druckwelle gelöscht wird (welche durch ein schnelles Öffnen bzw. Zerstören des Druckbehälters enthaltend des hochkomprimierten erfindungsgemäße Löschgases hervorgerufen würde) und eine erneute Entzündung der Brandstelle hiernach durch die erfolgte Inertisierung effektiv verhindert würde. Vorteilhaft ist in diesem Zusammenhang, dass ein Ausgasen des Heliums aus dem Gasgemisch im Freien zügig erfolgt und hiernach das verbleibende Argon in Form eines langsamer sich ausbreitenden Kissens eine brandhemmende Wirkung behält. Besonders deutlich werden die Vorteile des erfindungsgemäßen Gasgemischs auch bei der Verwendung als Löschgas in Booten, insbesondere auch in Segelbooten. Aufgrund des beschränkten Raumangebots besteht in diesem Bereich ein gesteigertes Interesse ein Löschgas in möglichst komprimierter Form vorrätig zu haben, also möglichst viel Gas auf möglichst wenig Raum. Darüber hinaus ist es auch in diesem Bereich von gesteigertem Interesse, dass das verwendete Löschgas gasförmig und nicht in flüssiger Form gelagert wird, um die entstehende Expansionskälte bei der Freisetzung des Gases so gering wie möglich zu halten. Dies ist im Bootsbereich besonders wichtig, da hier naturgemäß eine hohe Luftfeuchtigkeit vorliegt. Hieraus ergäbe sich bei starker Expansionskälte die Gefahr, dass die Löschanlage, insbesondere Ventile und Düsen vereisen und ihre Funktionsfähigkeit zumindest beeinträchtigt wird. Schließlich ist erwünscht, die Brandfolgeschäden im Booten gering zu halten, aufgrund der Gefahr des Sinkens, und darüber hinaus auch ein Eindringen von Löschgas in Schotten und Schappe erwünscht. All dies wird durch die Verwendung des erfindungsgemäßen Gasgemischs als Löschgas erreicht. Insbesondere ergeben sich aus dem Verteilungsmuster der beiden Gaskomponente, Argon und Helium, besondere Vorteile.

Durch die trogähnliche Form des Schiffskörpers, sammelt sich das schwere Argon nach dem Entmischen der beiden Gase unten beziehungsweise flutet den unteren Schiffsbereich und tief liegende Höhlräume, wohingegen das leichtere Helium aufsteigt und Brände im oberen Schiffsbereich erstickt. Hierbei kommt noch ein weiterer positiver Aspekt des Heliums zum tragen: Helium kann durch kleinste Öffnungen fließen, wodurch es sich sehr effektiv verteilen kann, beispielsweise in Zwischendecken, etc.

Somit werden auch schwer zugänglich Bereiche wirkungsvoll von den Löschgasen erreicht und eventuelle Brandherde effektiv erfasst und gelöscht.

In einem weiteren Ausführungsbeispiel wird das erfindungsgemäße Inertgasgemisch wegen seiner infolge der hohen Fluidität gegebenen, starken Expansionsfähigkeit als Treibgas verwendet. Aufgrund der hohen möglichen Kompressionsrate des erfindungsgemäßen Gasgemischs bei der gleichzeitigen schnellen Ausgasung wird eine hohe Triebleistung erreicht. Wie bereits eingangs beschrieben resultiert die Triebleistung aus der mechanischen Energie die bei der Entspannung des Gases freigesetzt wird (Expansionsenergie). Die Expansionsenergie entspricht hierbei in der Summe im wesentlichen der Kompressionsenergie, also der Energie, die benötigt wurde das Gas entsprechend zu verdichten, wird allerdings demgegenüber in einem Bruchteil der Zeit freigesetzt.

Je höher das Gas komprimiert werden kann, um so mehr Energie kann somit in dieser Form in dem Gas gespeichert werden und in Form von Expansionsenergie genutzt werden. Aufgrund der ungewöhnlich hohen Kompressionsfähigkeit des erfindungsgemäßen Gasgemischs kann entsprechend sehr viel Energie in dem Gas gespeichert werden. Dies ermöglicht es bei der Verwendung als Treibgas des erfindungsgemäßen Gasgemischs dass starke Beschleunigungen und auch die Beschleunigung größerer Massen effizient erreicht werden können, wie es sonst nur durch Verwendung herkömmlicher, Explosiv-Treibsätze erreicht werden kann. Im Gegensatz zu diesen hat die Verwendung des erfindungsgemäßen Gasgemischs den Vorteil, dass da keine explosiven Stoffe als Treibsatz verwendet werden, die Handhabung einfacher und auch sicherer ist. Darüber hinaus, da die Beschleunigung nicht auf einen Verbrennungsprozess im weitesten Sinne beruht, entstehen keinerlei Verbrennungsrückstände und die Beschleunigung erfolgt auch völlig geruchlos.

Das erfindungsgemäße Gasgemisch könnte bei dieser Anwendung in Form von einzelnen Gaspatronen verwendet werden oder es könnte auch eine größere Druckpatrone mit einer entsprechenden Ventilsteuerung verwendet werden.

Mögliche Einsatzvarianten sind zudem auch, neben der Verwendung zur Beschleunigung von Gegenständen, ein Einsatz für Airbags, Rettungsinseln, Notrutschen und dergleichen, bei denen häufig Explosiv-Treibsätze zur Anwendung kommen, dies aber aus verschiedenen Gründen, insbesondere der Handhabbarkeit und der Gefahr, die hiervon ausgeht, zu vermeiden gesucht wird.

Schließlich liefert einen weiteren Grund für den Einsatz des erfindungsgemäßen Gasgemischs bei Airbags die hiermit verbundene, in jüngster Zeit stark ansteigende Kriminalität, im Rahmen derer Airbag-Treibsätze aus Autos ausgebaut und deren Explosivstoffe gesammelt und in Sprengsätzen verwendet werden.

## Patentansprüche

1. Gasgemisch bestehend aus den Hauptkomponenten Argon und Helium, wobei der Argongehalt mindestens 70 % Vol.% ist, und
**dadurch gekennzeichnet, dass**
das Gasgemisch ohne Phasenübergang bis zu 5000 bar kompressibel ist, und
die Viskosität des Gasgemischs bei 273 K kleiner als 21 µPa*s ist.

2. Gasgemisch gemäß Anspruch 1, **dadurch gekennzeichnet, dass** der Argongehalt zwischen 75 und 95 Vol.%, vorzugsweise zwischen 80 und 90 Vol.%, vorzugsweise 88 % ± 1 Vol.% ist.

3. Gasgemisch gemäß einem der vorhergehenden Ansprüche, **dadurch gekennzeichnet, dass** das Gasgemisch als Nebenkomponente bis zu 0,1 Vol.%, bevorzugt 0,05 Vol. % wenigstens eines Odoriermittels enthält.

4. Gasgemisch gemäß einem der vorhergehenden Ansprüche, **dadurch gekennzeichnet, dass** das Gasgemisch weitere, die physikalischen Eigenschaften des Gasgemischs nicht beeinflussende Nebenkomponenten, insbesondere Verunreinigungen enthält.

5. Verwendung eines Gasgemischs nach einem der Ansprüche 1 bis 4 als Löschgas.

6. Verwendung gemäß Anspruch 5, wobei das Löschgas gezielt bzw. gesteuert durch ein Ventil ausgast.

7. Verwendung gemäß Anspruch 5, wobei das Löschgas durch eine ungezielte bzw. nichtgesteuerte Expansion, insbesondere unter Erzeugung einer Druckwelle ausgast.

8. Verwendung eines Gasgemischs nach einem der Ansprüche 1 bis 4 als Treibgas.

9. Verwendung gemäß Anspruch 8, wobei das Treibgas zur Beschleunigung von Massen, insbesondere Flüssigkeiten oder Festkörpern, insbesondere Tropfen oder Projektilen, verwendet wird.

10. Verwendung gemäß Anspruch 8, wobei das Treibgas zur schnellen Befüllung begrenzter Volumina, insbesondere zum Aufblähen von Airbags, Rettungsinseln oder Notrutschen verwendet wird.
